(19) Europäisches Patentamt
European Patent Office
Office européen des brevets

(11) **EP 2 031 031 B1**

(12) **EUROPÄISCHE PATENTSCHRIFT**

(45) Veröffentlichungstag und Bekanntmachung des Hinweises auf die Patenterteilung:
**13.07.2011  Patentblatt 2011/28**

(51) Int Cl.:
***C09J 5/02*** *(2006.01)*   ***C09J 11/06*** *(2006.01)*

(21) Anmeldenummer: **07115260.7**

(22) Anmeldetag: **30.08.2007**

(54) **Verwendung einer latenten Säure zur Haftverbesserung**

Use of a latent acid for improving adhesion

Utilisation d'un acide latent pour l'amélioration de la fixation

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**04.03.2009  Patentblatt 2009/10**

(73) Patentinhaber: **Sika Technology AG**
**6340 Baar (CH)**

(72) Erfinder:
• **Burckhardt, Urs**
**8049 Zürich (CH)**
• **Huck, Wolf-Rüdiger**
**8044 Zürich (CH)**
• **Braun, Andreas**
**8954 Geroldswil (CH)**

(74) Vertreter: **Sika Patent Attorneys**
**c/o Sika Technology AG**
**Geschäftsstelle Zürich**
**Tüffenwies 16**
**Postfach**
**8048 Zürich (CH)**

(56) Entgegenhaltungen:
EP-A- 0 252 603    EP-A- 0 592 139
US-A- 4 469 832    US-A1- 2006 124 225

**Beschreibung**

**Technisches Gebiet**

Die vorliegende Erfindung betrifft das Gebiet der haftverbessernden Zusammensetzungen.

**Stand der Technik**

Es ist bekannt, dass die Haftung von Klebstoffen und Dichtstoffen auf einigen Untergründen sehr schwierig zu erreichen ist. Lackierte Oberflächen sind ein derartiger Untergrund, welcher bekanntermassen sehr schwierig zu verkleben ist. Speziell kritisch sind diesbezüglich die neueren Generationen von Automobillacken in Kombination mit einkomponentigen Polyurethanklebstoffen.

Vor diesem Hintergrund wurden bereits zahlreiche Vorbehandlungsverfahren entwickelt, um die Haftung auf Lacken zu erhöhen. Beispielsweise beschreibt EP 1 760 129 A1 wässrige Haftreinigungszusammensetzungen, die eine starke Säure, sowie ein Benetzungshilfsmittel und Wasser umfassen und zur Vorbehandlung eines zu verklebenden oder abzudichtenden Substrates vorgesehen sind.

Die Verwendung von wässrigen Haftvermittlerzusammensetzungen zur Behandlung eines zu verklebenden oder abzudichtenden Substrates ist jedoch vielfach nicht erwünscht, weil Restwasser mit feuchtigkeitshärtenden Kleb- oder Dichtstoffen ungewollt reagieren kann und vielfach Probleme wegen zu langen Ablüftezeiten auftreten, insbesondere dann, wenn Arbeitsschritte zur Beschleunigung der Ablüftung, beispielsweise das Anblasen mit trockener Luft, nicht durchgeführt werden können. Zudem ist die Verwendung von starken freien Säuren bei der Herstellung und Anwendung derartiger Haftvermittlerzusammensetzungen mit grossen Arbeitsrisiken verbunden

EP 0 592 139 A1 beschreibt Vorbehandlungsmittel, welche Organosilane sowie eine Verbindung, welche bei Bestrahlung eine Säure freigibt, enthält.

**Darstellung der Erfindung**

Aufgabe der vorliegenden Erfindung ist es daher, eine gute Haftung von Klebstoffen und Dichtstoffen auf schwierig zu verklebenden oder abzudichtenden Untergründen zu erreichen, ohne eine Vorbehandlung mit einer stark sauren wässrigen Haftreinigerzusammensetzung vornehmen zu müssen.

Erfindungsgemäss wird diese Aufgabe gelöst durch die in Anspruch 1 definierte Verwendung. Weitere Aspekte der Erfindung sind das im Anspruch 9 definierte Verfahren, der daraus resultierende Artikel gemäss Anspruch 16, das im Anspruch 18 definierte Vorbehandlungsmittel sowie der im Anspruch 23 definierte Kleb- oder Dichtstoff.

Überraschend wurde gefunden, dass latente Säuren, welche durch Kontakt mit Wasser in eine Säure mit einem $pK_a$ von weniger als 2 umsetzbar sind, neue Möglichkeiten zur Haftverbesserung eröffnen, wenn die latente Säure ein Trialkylsilylsulfonat ist. Besonders vorteilhaft kommt die Erfindung bei der Verwendung auf Lacken zum Tragen, insbesondere, wenn es sich dabei um Automobillacke handelt.

Es hat sich weiterhin gezeigt, dass die Verwendung derartiger latenten Säuren aufgrund der verzögerten Freisetzung der Säuren Vorteile in der Arbeitssicherheit, insbesondere bei der Herstellung und Anwendung der jeweiligen Zusammensetzungen, bzw. Vorbehandlungsmittel, ergeben. Weitere Vorteile in der Handhabung, beispielsweise fehlende Staubentwicklung oder einfachere und genauere Dosierungsmöglichkeiten, ergeben sich aus der Tatsache, dass die meisten der latenten Säuren im Gegensatz zu den freien Säuren flüssig sind.

Zudem hat sich gezeigt, dass sich die Verwendung von latenten Säuren anstelle von freien Säuren vorteilhaft auf die Lagerstabilität von Zusammensetzungen auswirkt, insbesondere in feuchtigkeitshärtenden, bei Raumtemperatur plastisch verformbaren Klebstoffen oder Dichtstoffen.

Schliesslich hat sich völlig überraschenderweise gezeigt, dass für die Gewährleistung einer guten Haftung zumindest auf Lacken eine bedeutend kleinere Menge an latenter Säure im Vergleich zu den freien Säuren eingesetzt werden kann, was insbesondere in Hinblick auf Arbeitssicherheit und Kosten vorteilhaft ist.

Besonders bevorzugte Ausführungsformen der Erfindung sind Gegenstand der abhängigen Ansprüche.

**Wege zur Ausführung der Erfindung**

Ein erster Aspekt der Erfindung betrifft die Verwendung einer latenten Säure, welche durch Kontakt mit Wasser in eine Säure mit einem $pK_a$ von weniger als 2 umsetzbar ist, in einer nichtwässrigen Zusammensetzung, um die Haftung auf einem zu verklebenden oder abzudichtenden Substrat zu verbessern.

Die latente Säure ist ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyt-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethyl-silyl-benzolsulfonat.

Unter "$pK_a$" wird in der Chemie bekannterweise der negative dekadische Logarithmus der Säuredissoziations-konstante $K_a$ verstanden:

$$pK_a = -\log_{10}K_a$$

Eine latente Säure, welche durch Kontakt mit Wasser in eine Säure mit einem $pK_a$ von weniger als 2 umsetzbar ist, stellt eine Verbindung dar, die sich in nichtwässriger Umgebung nicht sauer verhält, beim Kontakt mit Wasser oder Feuchtigkeit jedoch zu einer starken Säure hydrolysiert wird. Damit ergibt sich insbesondere die Möglichkeit, eine an sich erwünschte Säurewirkung erst zu einem gegebenen Zeitpunkt durch Zuführen von Wasser oder Feuchtigkeit auszulösen.

Die meist bevorzugte latente Säure ist Trimethylsilylbenzolsulfonat. Trimethylsilylbenzolsulfonat hydrolysiert in wässriger Umgebung oder Gegenwart von Feuchtigkeit zu Benzolsulfonsäure und Trimethylsilanol. Benzolsulfonsäure ist eine starke Säure mit einem $pK_a$ von ungefähr 0.7 (Handbook of Chemistry and Physics, CRC Press, Boca Raton, USA).

Die latente Säure kommt insbesondere in den im Weiteren beschriebenen Einsatzgebieten zum Einsatz:

- in Aktivatoren
- in Primern
- in Kleb- oder Dichtstoffen.

Verwendung von latenten Säuren in Aktivatoren:

In einer Ausführungsform wird die latente Säure in einer nichtwässrigen Zusammensetzung verwendet, welche als Aktivator geeignet ist, wobei die nichtwässrige Zusammensetzung mindestens ein organisches Lösungsmittel umfasst und zum Vorbehandeln des Substrates geeignet ist.

Als "Aktivator" wird im vorliegenden Dokument eine haftverbessernde Zusammensetzung bezeichnet, welche zum Vorbehandeln eines Substrates verwendbar ist und welche sich dadurch auszeichnet, dass sie kein Bindemittel enthält und nach dem Ablüften einen Film von weniger als 2 Mikrometern Schichtdicke auf dem Substrat zurücklässt. Typischerweise bleibt nach dem Ablüften des Aktivators ein Film zurück, welcher eine Schichtdicke von 0.5 Mikrometer oder weniger aufweist und insbesondere aus wenigen Molekularlagen besteht. Die Vorbehandlung des Substrats mit dem Aktivator bewirkt einerseits eine Reinigung der Substratoberfläche sowie andererseits eine Verbesserung der Haftung zu einer nachfolgend aufgetragenen Schicht, insbesondere einem Klebstoff oder Dichtstoff. In der Regel wird der Aktivator mit einem getränkten Tuch auf die Substratoberfläche aufgetragen und danach entweder abgelüftet oder mit einem sauberen, trockenen Tuch abgewischt.

Das organische Lösungsmittel ist vorzugsweise ein leichtflüchtiges organisches Lösungsmittel, insbesondere aus der Gruppe der Ester, Alkohole, Ketone und Kohlenwasserstoffe. Bevorzugt sind organische Lösungsmittel mit einem Siedepunkt von weniger als 100 °C (bei Normdruck). Besonders bevorzugt ist das organische Lösungsmittel ausgewählt aus der Gruppe bestehend aus Methylacetat, Ethylacetat, Butylacetat, Methanol, Ethanol, Isopropanol, Butanol, Aceton, Methylethylketon, Hexan, Heptan, Toluol, Xylol und White Spirit. Meist bevorzugt als organisches Lösungsmittel sind Alkohole, insbesondere Isopropanol.

Der Mengenanteil der latenten Säure beträgt vorzugsweise 0.1 bis 10 Gew.-%, bezogen auf die nichtwässrige Zusammensetzung.

Verwendung von latenten Säuren in Primern:

In einer weiteren Ausführungsform wird die latente Säure in einer nichtwässrigen Zusammensetzung verwendet, welche als Primer geeignet ist, wobei die nichtwässrige Zusammensetzung mindestens ein Bindemittel sowie mindestens ein organisches Lösungsmittel umfasst.

Als "Primer" wird im vorliegenden Dokument eine als Voranstrich geeignete haftverbessernde Zusammensetzung verstanden, die befähigt ist, nach ihrer Applikation und Aushärtung auf einem Substrat einen festen, gut haftenden Film in einer Schichtdicke von mindestens 2 Mikrometern, insbesondere von zwischen 2 und 100 µm, bevorzugt von 10 - 20 µm, zu bilden. Hierbei kommt die Aushärtung entweder allein durch das Verdampfen des Lösungsmittels, oder durch eine chemische Reaktion, oder durch eine Kombination dieser Faktoren, zustande. Der Primer gewährleistet eine gute Haftung zu einer nachfolgend aufgebrachten Schicht, insbesondere einem Klebstoff oder Dichtstoff.

Das Bindemittel ist vorzugsweise ein reaktives Bindemittel und umfasst insbesondere ein Isocyanatgruppen und/oder Alkoxysilangruppen und/oder Epoxidgruppen aufweisendes Polymer oder Oligomer.

Das organische Lösungsmittel ist vorzugsweise ein leichtflüchtiges organisches Lösungsmittel, insbesondere aus der Gruppe der Ester, Alkohole, Ketone und Kohlenwasserstoffe. Bevorzugt sind organische Lösungsmittel mit einem Siedepunkt von weniger als 100 °C (bei Normdruck). Besonders bevorzugt ist das organische Lösungsmittel ausgewählt aus der Gruppe bestehend aus Methylacetat, Ethylacetat, Butylacetat, Aceton, Methylethylketon, Hexan, Heptan, Toluol, Xylol und White Spirit. Meist bevorzugt als organisches Lösungsmittel sind Ethylacetat und Methylketon.

Der Mengenanteil der latenten Säure beträgt vorzugsweise 0.1 bis 10 Gew.-%, bezogen auf die nichtwässrige Zusammensetzung.

Verwendung von latenten Säuren in Kleb- oder Dichtstoffen:

In einer weiteren Ausführungsform wird die latente Säure in einer nichtwässrigen Zusammensetzung verwendet, welche als bei Raumtemperatur plastisch verformbarer Klebstoff oder Dichtstoff geeignet ist, wobei die nichtwässrige Zusammensetzung mindestens ein reaktives Polymer umfasst.

Ein bei Raumtemperatur plastisch verformbarer Klebstoff oder Dichtstoff lässt sich bei Raumtemperatur applizieren und steht damit im Gegensatz zu sogenannten Warmmelts (Warmschmelzklebstoffe) oder Hotmelts (Heissschmelzklebstoffe), welche bei Raumtemperatur nicht plastisch verformbar sind und zur Applikation auf erhöhte Temperatur (60 - 80 °C für Warmmelts bzw. 80 - 200 °C für Hotmelts) erwärmt werden müssen.

Vorzugsweise ist der Klebstoff oder Dichtstoff feuchtigkeitshärtend.

Das reaktive Polymer ist vorzugsweise ein Isocyanatgruppen und/oder Alkoxysilangruppen aufweisendes Polymer, insbesondere ein Isocyanatgruppen und/oder Alkoxysilangruppen aufweisendes Polyurethanpolymer.

Der Klebstoff oder Dichtstoff kann einkomponentig oder mehrkomponentig sein. Bevorzugt ist der Klebstoff oder Dichtstoff einkomponentig.

Am meisten bevorzugt ist der Klebstoff oder Dichtstoff ein feuchtigkeitshärtender einkomponentiger Polyurethanklebstoff oder -dichtstoff, wie er beispielsweise unter der Produktelinie Sikaflex® bei Sika Schweiz AG kommerziell erhältlich ist.

Durch die Verwendung der latenten Säure weist der Klebstoff oder Dichtstoff eine verbesserte Haftung zu gewissen Substraten auf. Bei der Anwendung des beschriebenen Kleb- oder Dichtstoffes kann deshalb unter gewissen Umständen auf eine Vorbehandlung des zu verklebenden oder abzudichtenden Substrates mittels einer haftverbessernden Zusammensetzung, insbesondere eines Aktivators oder eines Primers, verzichtet werden, insbesondere dann, wenn es sich beim Substrat um ein lackiertes Substrat handelt.

Beim Handhaben der beschriebenen nichtwässrigen Zusammensetzungen, welche eine der beschriebenen latenten Säuren enthalten, tritt die Säurewirkung nicht unmittelbar, sondern verzögert, ein. Dies weist den grossen Vorteil auf, dass ein ungewollter Kontakt der Zusammensetzungen mit beispielsweise der menschlichen Haut oder dem Auge keine unmittelbaren Schädigungen durch die Ätzwirkung der Säure verursachen und dadurch eine längere Zeit für das Durchführen von Gegenmassnahmen, wie beispielsweise Abwischen oder Abspülen mit einem unschädlichen Lösungsmittel, zur Verfügung steht. Somit ist der Gebrauch von solchen Zusammensetzungen aus arbeitshygienischen Aspekten besonders vorteilhaft.

Ein weiterer wesentlicher Vorteil der beschriebenen nichtwässrigen Zusammensetzungen besteht darin, dass ihre Herstellung einfacher ist, weil die latenten Säuren meist Flüssigkeiten darstellen, im Gegensatz zu den entsprechenden freien Säuren, welche bei Raumtemperatur in der Mehrzahl fest sind, und dadurch ohne Staubentwickung gehandhabt und einfacher und genauer dosiert werden können.

Ein weiterer Aspekt der Erfindung betrifft ein Verfahren zum Verkleben oder zum Abdichten, welches die folgenden Schritte umfasst:

a) Bereitstellen einer haftverbessernden Zusammensetzung, umfassend eine in einem organischen Lösungsmittel gelöste latente Säure, welche durch Kontakt mit Wasser in eine Säure mit einem $pK_a$ von weniger als 2 umsetzbar ist, und danach:

b) Applikation der Zusammensetzung auf ein Substrat **S1**
c) Ablüften oder Abwischen der Zusammensetzung;
d) Applikation eines Klebstoffes oder Dichtstoffes auf die abgelüftete oder abgewischte Zusammensetzung;
e) Kontaktieren des Klebstoffes oder Dichtstoffes mit einem Substrat **S2**;

oder

b') Applikation der Zusammensetzung auf ein Substrat **S1;**

c') Ablüften oder Abwischen der Zusammensetzung;

d') Applikation eines Klebstoffes oder Dichtstoffes auf ein Substrat **S2,**

e') Kontaktieren des Klebstoffes oder Dichtstoffes mit der abgelüfteten oder abgewischten Zusammensetzung;

oder

b") Applikation der Zusammensetzung auf ein Substrat **S1;**

c") Ablüften oder Abwischen der Zusammensetzung;

d") Applikation eines Klebstoffes oder Dichtstoffes zwischen die Oberflächen des Substrates **S1** und **S2**;

wobei das Substrat **S2** aus dem gleichen oder einem unterschiedlichen Material wie das Substrat **S1** besteht oder wobei das Substrat **S1** und das Substrat S2 ein Stück bilden.

Die latente Säure, welche durch Kontakt mit Wasser in eine Säure mit einem $pK_a$ von weniger als 2 umsetzbar ist, sowie das organische Lösungsmittel wurden bereits vorgängig im Detail beschrieben.

Der Mengenanteil der latenten Säure beträgt vorzugsweise 0.1 bis 10 Gew.-%, bezogen auf die haftvermittelnde Zusammensetzung.

Falls es sich beim Substrat **S2** um das gleiche Substrat wie **S1** handelt, ist es vorzugsweise ebenfalls mit der besagten haftverbessernden Zusammensetzung vorzubehandeln. Falls **S2** ein von **S1** unterschiedliches Substrat ist, kann es je nach Material und Oberfläche von **S2**, beziehungsweise je nach Klebstoff oder Dichtstoff, notwendig sein, seine Oberfläche ebenfalls mit der besagten Zusammensetzung und/oder mit einer anderen Zusammensetzung vorzubehandeln, um eine gute Haftung zu gewährleisten.

Es ist hierbei zu beachten, dass vor dem Kontaktieren des Klebstoffes oder Dichtstoffes mit der Oberfläche des Substrates **S1** diese in einer Weise abgelüftet oder abgewischt ist, so dass das Lösungsmittel weitestgehend verdampft ist. Die Ablüftezeit ist einerseits abhängig von Luftfeuchtigkeit, Temperatur und Luftbewegungen über der Oberfläche und andererseits von der Oberflächenstruktur und der aufgetragenen Menge. Wenn eine Oberfläche mit warmer, trockener Luft angeblasen wird, wird es wesentlich kürzere Zeit dauern, bis das organische Lösungsmittel verdampft ist, als wenn kein Anblasen angewendet oder wenn bei tiefer Temperatur abgelüftet wird. Typischerweise ist davon auszugehen, dass die Wartezeit zwischen Applikation der haftverbessernden Zusammensetzung und Kontaktieren mit dem Kleb- oder Dichtstoff zwischen 1 Minute und 15 Minuten, insbesondere zwischen 1 und 5 Minuten, beträgt.

Es ist auch möglich, unmittelbar anschliessend an die Applikation der haftverbessernden Zusammensetzung diese mit einem Tuch weitgehend wieder abzuwischen. Dies wird in der Fachwelt als "wipe-off" bezeichnet. In diesen Fällen ist die Offenzeit im Wesentlichen 0 Minuten, und es kann unmittelbar nach dem Abwischen der Klebstoff oder Dichtstoff appliziert werden.

Die Applikation der Zusammensetzung kann auf vielfältige Art und Weise, vorzugsweise durch Aufsprühen oder durch Abwischen mit einem getränkten Tuch, erfolgen. Anschliessend an die Applikation oder während der Applikation kann auch noch ein Reiben unter angelegtem Druck erfolgen, um die Reinigung zu unterstützen.

Es können diverse Klebstoffe oder Dichtstoffe verwendet werden. Je nach Verwendung und Einsatzort des verklebten oder abgedichteten Körpers kann dies ein Klebstoff oder Dichtstoff auf Epoxidharzbasis, auf Polyurethanbasis, auf (Meth)acrylatbasis oder auf Basis von silanterminierten Polymeren ("STP") oder Silikonen sein. Es kann sich hierbei beispielsweise um Raumtemperatur-härtende Kleb- oder Dichtstoffe, um Heissschmelzklebstoffe (sogenannte "hotmelts"), um Dispersionsklebstoffe oder -dichtstoffe oder Haftklebstoffe (sogenannte "pressure sensitive adhesives") handeln. Der Kleb- oder Dichtstoff kann einkomponentig oder mehrkomponentig sein. Bevorzugt ist der Kleb- oder Dichtstoff einkomponentig. Am meisten bevorzugt ist der Klebstoff ein feuchtigkeitshärtender einkomponentiger Polyurethankleb- oder Dichtstoff, insbesondere ein feuchtigkeitshärtender einkomponentiger Polyurethanklebstoff, wie sie beispielsweise als Sikaflex® bei Sika Schweiz AG kommerziell erhältlich sind.

Nach dem Fügen, d.h. nach dem Schritt e), beziehungsweise e'), beziehungsweise d"), erfolgt üblicherweise ein Schritt f) des Aushärtens des Kleb- oder Dichtstoffes, wobei dies je nach Kleb- oder Dichtstoff sofort oder zeitverschoben erfolgen kann.

Als Substrate **S1** und/oder **S2** können diverse Materialien verwendet werden, wie beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (Hart- und Weich-PVC), Acrylonitril-Butadien-Styrol-Copolymere (ABS), SMC (Sheet Moulding Composites), Polycarbonat

(PC), Polyamid (PA), Polyester, PMMA, Polyester, Epoxidharze, Polyurethane (PUR), Polyoxymethylen (POM), Polyolefine (PO), insbesondere mittels Plasma, Corona oder Flammen oberflächenbehandeltes Polyethylen (PE) oder Polypropylen (PP), Ethylen/Propylen-Copolymere (EPM) und Ethylen/Propylen-Dien-Terpolymere (EPDM); beschichtete Substrate wie pulverbeschichtete Metalle oder Legierungen; sowie Farben und Lacke, insbesondere Automobillacke. Besonderes vorteilhaft zum Tragen kommt die Erfindung, wenn das zumindest das Substrat **S1** ein lackiertes Substrat, insbesondere ein lackiertes Metall, ist. Als Lacke gelten insbesondere Beschichtungen, welche auf anderen Materialien, wie beispielsweise Kunststoffe, Holz, Keramiken, Glas, Beton, Natursteine, Metalle oder Legierungen, aufgebracht werden. Insbesondere handelt es sich bei den Lacken um Automobillacke, insbesondere um Automobillacke der neueren Generation, welche bei der Verklebung mit einem Klebstoff oder Dichtstoff vielfach Anlass für Haftprobleme geben. Derartige Lacke können beispielsweise KTL-Lacke (KTL=Kathodische Tauchlackierung) oder Mehrschichtenlacke sein. Ein typischer Automobillack weist mindestens einen Basecoat und einen Topcoat (Decklack oder Clearcoat) auf. Die verwendeten Lacke können einerseits von Modell zu Modell bzw. innerhalb unterschiedlicher Farben des gleichen Modells variieren. Besonders auf diesen problematischen Lacken gelingt es dank der vorliegenden Erfindung eine gute Haftung zu erreichen.

Die so erhaltenen verklebten oder abgedichteten Artikel sind von vielfältiger Natur. Insbesondere sind diese aus dem Gebiet der industriellen Fertigung; bevorzugt sind sie Transportmittel, insbesondere Automobile. Sie können auch Anbauteile sein. Derartige Anbauteile sind insbesondere vorgefertigte Modulteile, welche an der Fertigungslinie als Module verwendet werden und insbesondere an- oder eingeklebt werden. Bevorzugt werden diese vorgefertigten Anbauteile im Transportmittelbau eingesetzt. Beispiele derartiger Anbauteile sind Führerkabinen von Lastkraftwagen oder von Lokomotiven oder Schiebedächer für Autos. Es sind aber auch Anwendungen im Bau von Möbeln, weisser Ware, wie Waschmaschinen, oder Gebäudeteilen, wie Fassaden oder Fahrstühle, möglich.

Ein weiterer Aspekt der Erfindung stellt ein Vorbehandlungsmittel dar, welches enthält:

i) mindestens eine latente Säure, welche durch Kontakt mit Wasser in eine Säure mit einem $pK_a$ von weniger als 2 umsetzbar ist,
ii) mindestens ein organisches Lösungsmittel, und
iii) mindestens ein Bindemittel und / oder mindestens ein Additiv, welches ausgewählt ist aus der Gruppe bestehend aus Farbstoffe, Lumineszenzindikatoren, Haftvermittler, insbesondere Titanate und Silane, und Tenside.

Die latente Säure, welche durch Kontakt mit Wasser in eine Säure mit einem $pK_a$ von weniger als 2 umsetzbar ist, das organische Lösungsmittel sowie das Bindemittel wurden bereits vorgängig im Detail beschrieben.

Zusätzlich zu latenter Säure und organischem Lösungsmittel enthält dieses Vorbehandlungsmittel weiterhin ein Additiv und/oder ein Bindemittel.

Das Additiv ist ausgewählt aus der Gruppe bestehend aus Farbstoffe, Lumineszenzindikatoren, Haftvermittler, insbesondere Titanate und Silane, und Tenside.

Farbstoffe sind Stoffe, welche dem Vorbehandlungsmittel eine dem menschlichen Auge sichtbare Färbung geben. Der Farbstoff kann gelöst oder ungelöst vorliegen. Es kann sich insbesondere um ein Pigment handeln. Einsetzbare Farbstoffe sind dem Fachmann bekannt.

Lumineszenzindikatoren sind Substanzen, welche bei Bestrahlung mit einer Strahlung bestimmter Wellenlänge eine Strahlung unterschiedlicher Wellenlänge emittieren, insbesondere solche, welche bei Bestrahlung mit UV-Strahlung lumineszieren, bevorzugt solche, die bei Bestrahlung mit Strahlung einer Wellenlänge zwischen 240 und 400 nm lumineszieren, insbesondere fluoreszieren. Dem Fachmann sind viele derartige lumineszierende Substanzen bekannt. Geeignete lumineszierende Substanzen sind beispielsweise beschrieben in "11 Kirk-Othmer Encyclopedia of Chemical Technology" (John Wiley & Sons, 4th Ed., 1994) auf den Seiten 227 - 241.

Durch die Verwendung von Farbstoffen kann beispielsweise visuell einfach überprüft werden, ob ein zu verklebendes oder abzudichtendes Substrat mit dem Vorbehandlungsmittel behandelt wurde oder nicht. Bei der Verwendung von Lumineszenzindikatoren ist dies insbesondere unter Zuhilfenahme einer UV-Lichtquelle auch der Fall. Diese Art der Detektierung ist besonders dann vorteilhaft, wenn es sich um sichtbare, d.h. nicht verdeckte, Substratoberflächen handelt. So ist einerseits nachweisbar, dass ein Substrat mit einem Vorbehandlungsmittel behandelt wurde; andererseits ist dies aber für den Betrachter bei normalem Tageslicht nicht sichtbar, und das Substrat ist dadurch vom ästhetischen Aspekt her nicht beeinträchtigt. Diese Art des Nachweises ist insbesondere für Qualitätssicherung und Gewährleistung der Prozesssicherheit von besonderem Interesse, insbesondere bei industriellen Applikationen.

Als Lumineszenzindikatoren geeignet sind insbesondere Substanzen, welche unter den Handelsmarken Uvitex® von Ciba Specialty Chemicals, Lumilux® von Riedel-de Haen GmbH, Blankophor® von Bayer Chemicals und Ultraphor® von BASF kommerziell erhältlich sind. Bevorzugt ist Uvitex® OB (Ciba Specialty Chemicals).

Die Verwendung von Haftvermittlern, insbesondere Titanate und Silane, kann die haftverbessernde Wirkung des Vorbehandlungsmittels noch verstärken oder dieses für eine breitere Palette von Oberflächen einsetzbar machen. Als Titanate geeignet sind solche, welche mindestens einen über eine Sauerstoff-Titan-Bindung an das Titanatom gebundenen Substituenten aufweisen, insbesondere eine Alkoxygruppe, Sulfonatgruppe, Carboxylatgruppe, Dialkylphosphatgruppe, Dialkylpyrophosphatgruppe oder eine Acetylacetonatgruppe, wobei bei mehreren Substituenten diese alle gleich oder untereinander gemischt sein können. Beispiele für geeignete Titanate sind die von Kenrich Petrochemicals unter dem Handelsnamen Ken-React® sowie die von DuPont unter dem Handelsnamen Tyzor® erhältlichen Typen. Als Silane geeignet sind Aminosilane, wie beispielsweise 3-Aminopropyltrimethoxysilan, N-(2-Aminoethyl)-3-aminopropyl-trimethoxysilan, Bis-[3-(trimethoxysilyl)-propyl]-amin, N-(2-Aminoethyl)-3-aminopropyl-dimethoxymethylsilan, 4-Amino-3,3-dimethylbutyl-trimethoxysilan, 1,3,5-tris[3-(trimethoxysilyl)propyl]-1,3,5-triazin-2,4,6(1H,3H,5H)-trion-harnstoff (=Tris(3-(trimethoxysilyl)propyl)isocyanurat) sowie die ensprechenden Analoga, bei welchen die Methoxygruppe durch einer Ethoxy- oder Isoproxygruppe ersetzt ist, Mercaptosilane, wie beispielsweise 3-Mercaptopropyltrimethoxysilan, Epoxysilane, wie beispielsweise 3- Glycidyloxypropyltrimethoxysilan, Ureidoalkylsilane sowie Addukte von Amino- und /oder Mercaptosilanen mit Epoxiden oder Epoxysilanen, beispielsweise mit 3-Glycidyloxypropylsilanen.

Tenside, auch Netzmittel genannt, sind natürliche oder synthetische Stoffe, welche in Lösungen die Oberflächenspannung von Flüssigkeiten herabsetzen. Als Tenside können anionische, kationische, nichtionische oder ampholytische Tenside oder deren Mischungen verwendet werden.

Besonders geeignet sind nichtionische Tenside, insbesondere alkoxylierte Alkohole.

Bei all den genannten zusätzlichen Bestandteilen ist darauf zu achten, dass durch deren Verwendung in der gewählten Konzentration weder die Lagerstabilität des Vorbehandlungsmittels noch die Haftung von Klebstoffen oder Dichtstoffen auf mit dem Vorbehandlungsmittel behandelten Oberflächen nachteilig beeinflusst werden.

Bei einem bevorzugten Vorbehandlungsmittel ist die latente Säure ein Trialkylsilylsulfonat, insbesondere Trimethylsilyl-benzolsulfonat.

Falls das Vorbehandlungsmittel kein Bindemittel enthält, stellt es einen Aktivator dar. In diesem Fall beträgt die Menge des organischen Lösungsmittels vorteilhaft 80 - 99.9 Gew.-%, insbesondere 90 - 99.9 Gew.-%, bevorzugt 90 - 99 Gew.-%, bezogen auf das Vorbehandlungsmittel.

Falls das Vorbehandlungsmittel ein Bindemittel enthält, stellt es einen Primer dar. In diesem Fall beträgt die Menge des organischen Lösungsmittels vorteilhaft 40 - 80 Gew.-%, insbesondere 60 - 80 Gew.-%, bezogen auf das Vorbehandlungsmittel. Das Bindemittel ist vorzugsweise ein Isocyanatgruppen und/oder Alkoxysilangruppen und/oder Epoxidgruppen aufweisendes Polymer oder Oligomer.

Ein weiterer Aspekt der Erfindung stellt ein feuchtigkeitshärtender, bei Raumtemperatur plastisch verformbarer Klebstoff oder Dichtstoff dar, welcher enthält:

$\alpha$) mindestens ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyl-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethylsilyl-benzolsulfonat, bevorzugt Trimethylsilylbenzolsulfonat; und

$\beta$) mindestens ein reaktives Polymer, insbesondere ein Isocyanatgruppen und/oder Alkoxysilangruppen aufweisendes Polymer, bevorzugt ein Isocyanatgruppen und/oder Alkoxysilangruppen aufweisendes Polyurethanpolymer.

Durch den Zusatz des Trialkylsilylsulfonats, welches bei Feuchtigkeitskontakt zu einer starken Säure hydrolysiert, wird eine verbesserte Haftung des Kleb- oder Dichtstoffes erreicht, ohne dass dessen übrige Eigenschaften, wie insbesondere die Lagerstabilität oder die Applikationseigenschaften, nachteilig beeinflusst werden.

Als reaktives Polymer geeignet sind insbesondere Isocyanatgruppen und/oder Alkoxysilangruppen aufweisende Polymere, bevorzugt Isocyanatgruppen und/oder Alkoxysilangruppen aufweisende Polyurethanpolymere, wie sie dem Fachmann in der Verwendung für Polyurethan-Klebstoffe und - Dichtstoffe bestens bekannt sind.

Ein geeignetes Isocyanatgruppen aufweisendes Polyurethanpolymer ist erhältlich durch die Umsetzung von mindestens einem Polyol mit mindestens einem Polyisocyanat.

Als Polyole geeignet sind insbesondere Polyetherpolyole, Polyesterpolyole und Polycarbonatpolyole sowie Mischungen dieser Polyole.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekulargewicht' oder 'Molgewicht' versteht man im vorliegenden Dokument stets das Molekulargewichtsmittel $M_n$. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim® von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.

- Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole.

- Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylnitril, Vinylchlorid, Vinylacetat, Vinylalkohol, Isobutylen und Isopren, beispielsweise polyhydroxyfunktionelle Acrylnitril/Butadien-Copolymere, welche zum Beispiel aus carboxylterminierten Acrylnitril/Butadien-Copolymeren (kommerziell erhältlich unter dem Namen Hycar® CTBN von Noveon) und Epoxiden oder Aminoalkoholen herstellbar sind; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Als Polyisocyanate für die Herstellung eines Isocyanatgruppen aufweisenden Polyurethanpolymers können handelsübliche aliphatische, cycloaliphatische oder aromatische Polyisocyanate, insbesondere Diisocyanate, verwendet werden.

Geeignete Diisocyanate sind beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und Cyclohexan-1,4-diisocyanat und beliebige Gemische dieser Isomeren, 1-Methyl-2,4- und 1-Methyl-2,6-diisocyanatocyclohexan und beliebige Gemische dieser Isomeren (HTDI oder $H_6$TDI), 1-Isocyanato-3,3,5-trimethyl-5-isocyanatomethyl-cyclohexan (=Isophorondiisocyanat oder IPDI), Perhydro-2,4'- und Perhydro-4,4'-diphenylmethandiisocyanat (HMDI oder $H_{12}$MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und p-Tetramethyl-1,4-xylylendiisocyanat (mund p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI, TDI, HDI und IPDI. Besonders bevorzugt sind MDI und IPDI.

Die Herstellung eines Isocyanatgruppen aufweisenden Polyurethanpolymers erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2, so dass ein Isocyanatgruppen aufweisendes Polyurethanpolymer entsteht.

Geeignete Silangruppen aufweisende Polymere ("STP") sind die als "MS-Polymere" bekannten, Alkoxysilangruppen-terminierten Polyetherpolymere, welche typischerweise durch Hydrosilylierung von Allylgruppenterminierten Polyetherpolymeren erhalten werden. Geeignet sind auch solche Alkoxysilangruppen-terminierte Polymere, welche auf ähnliche Weise über Hydrosilyierungsreaktionen erhalten werden und welche als Gerüst (Backbone) nicht ausschliesslich Polyether-, sondern anteilig oder vollständig Polyacrylat- und/oder Polykohlenwasserstoff-Ketten aufweisen.

Weiterhin geeignete Silangruppen aufweisende Polymere sind Alkoxysilangruppen aufweisende Polyurethanpolymere. Diese lassen sich in einer Ausführungsform durch Reaktion von den oben beschriebenen Isocyanatgruppen aufweisenden Polyurethanpolymeren mit Aminosilanen, insbesondere Aminoalkyldialkoxy- oder Aminoalkyltrialkoxysilanen, herstellen. Wird in dieser Reaktion mindestens die stöchiometrische Menge Aminosilan verwendet, entstehen Polyurethanpolymere, welche keine Isocyanatgruppen, sondern lediglich Silangruppen aufweisen. Wird eine unterstöchiometrische Menge an Aminosilan verwendet, entstehen Polyurethanpolymere, welche sowohl Silangruppen als auch Isocyanatgruppen aufweisen.

Weiterhin geeignete Silangruppen aufweisende Polymere sind solche, welche aus der Umsetzung von OH-Gruppen aufweisenden Polymeren, insbesondere von OH-terminierten Polyurethanen, die ihrerseits durch die eine überstöchiometrische Umsetzung von Polyolen mit Polyisocyanaten erhalten werden, mit Isocyanatosilanen, insbesondere Isocyanatoalkyldialkoxy- oder Isocyanatoalkyltrialkoxysilanen, erhalten werden.

Der Kleb- oder Dichtstoff kann weitere Bestandteile, insbesondere in Polyurethanzusammensetzungen üblicherweise eingesetzte Hilfs- und Zusatzstoffe, aufweisen wie beispielsweise die folgenden:

- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-$\alpha$-Olefine (APAO);
- anorganische und organische Füllstoffe, zum Beispiel gemahlene oder gefällte Calciumcarbonate, welche gegebenenfalls mit Fettsäuren, insbesondere Stearaten, beschichtet sind, Baryt ($BaSO_4$, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln;
- Fasern, beispielsweise aus Polyethylen;
- Pigmente, beispielsweise Titandioxid oder Eisenoxide;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismut-tris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Reaktivverdünner und Vernetzer, beispielsweise monomere Diisocyanate sowie Oligomere und Derivate dieser Polyisocyanate, Addukte monomerer Polyisocyanate mit kurzkettigen Polyolen, sowie Adipinsäuredihydrazid und andere Dihydrazide, sowie Polyisocyanate mit blockierten Isocyanatgruppen, wie sie bereits vorgängig erwähnt wurden;

- Trocknungsmittel, wie beispielsweise Molekularsiebe, Calciumoxid, hochreaktive Isocyanate wie p-Tosylisocyanat, Orthoameisensäureester, Tetraalkoxysilane wie Tetraethoxysilan;

- Organoalkoxysilane, im Folgenden auch "Silane" genannt, wie beispielsweise Epoxysilane, (Meth)acrylsilane, Isocyanatosilane, Vinylsilane, Carbamatosilane, Alkylsilane, S-(Alkylcarbonyl)-mercaptosilane sowie oligomere Formen dieser Silane;

- Stabilisatoren gegen Wärme, Licht- und UV-Strahlung;

- flammhemmende Substanzen;

- oberflächenaktive Substanzen wie beispielsweise Netzmittel, Verlaufsmittel, Entlüftungsmittel oder Entschäumer;

- Biozide wie beispielsweise Algizide, Fungizide oder das Pilzwachstum hemmende Substanzen.

Es hat sich gezeigt, dass Vorteile in der Lagerstabilität vorhanden sind, wenn latenten Säuren anstelle von freien Säuren verwendet werden. Dies ist insbesondere bei feuchtigkeitshärtenden, bei Raumtemperatur plastisch verformbaren Klebstoffen oder Dichtstoffen der Fall. Da starke Säuren die Vernetzungsreaktion katalytisch beschleunigen, sind feuchtigkeitshärtende Klebstoffe oder Dichtstoffe, welche freie starke Säuren enthalten, praktisch nicht lagerfähig, da ihre Viskosität schon nach kurzer Lagerzeit so stark ansteigt, dass sie auf konventionelle Art nicht mehr applizierbar sind. Bei den entsprechenden Klebstoffen oder Dichtstoffen, welche eine entsprechende latente Säure enthalten, ist dies nicht der Fall. Derartige Kleb- und Dichtstoffe sind über längere Zeiträume lagerfähig.

**Beispiele**

Herstellung und Prüfung haftverbessernder Zusammensetzungen

Die latente Säure Trimethylsilyl-benzolsulfonat sowie eine Reihe von freien Säuren wurden unter Stickstoff-Atmosphäre in Isopropanol gelöst, wobei die Konzentrationen der latenten bzw. der freien Säuren in den hergestellten Lösungen jeweils in den Tabellen angegeben sind (in Gewichts-%). Mit diesen Lösungen wurden Metallbleche, welche mit verschiedenen handelsüblichen Automobillacken beschichtet waren, vorbehandelt. Nach einer Wartezeit (Ablüftezeit) wurde der feuchtigkeitshärtende einkomponentige PolyurethanKlebstoff Sikaflex®-250 DM-2 mittels Kartuschenpistole als Raupe auf die vorbehandelten Stellen aufgetragen und der Klebstoff nach Aushärtung mittels Haftungstest ("Raupentest") auf Haftung geprüft. Hierbei wird am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Platzieren eines Schnitts senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Haftung erfolgt durch Abschätzen des kohäsiven Anteils der Haftfläche:

1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

Testresultate mit Kohäsionsbruchwerten von weniger als 75% gelten als ungenügend.

Haftung auf Automobillack HDTC 4041

In Tabelle 1 sind Zusammensetzungen, bzw. Vorbehandlungsmittel, angegeben, welche aus der in der angegeben Menge latenter Säure, bzw. freie Säure, und Isopropanol bestehen. Die Herstellung erfolgt durch Einrühren unter Inertatmosphäre ($N_2$). Mit den hergestellten Lösungen gemäss Tabelle 1 wurde ein mit dem Automobillack HDTC 4041 von PPG beschichtetes Metallblech vorbehandelt, indem die Lösungen mit einem Tuch aufgetragen und unmittelbar anschliessend mit einem trockenen Tuch wieder abgewischt wurden ("wipe on/off"). Nach einer Wartezeit von 10 Minuten wurde Sikaflex®-250 DM-2 als 10 mm breite Rundraupe aufgetragen und während 7 Tagen im Normklima (23 °C / 50% Luftfeuchtigkeit) ausgehärtet, woraufhin der erste Haftungstest ("RT") vorgenommen wurde. Darauf wurde das Blech während 7 Tagen bei 23 °C in Wasser eingetaucht, woraufhin erneut ein Haftungstest ("WL") vorgenommen wurde. Schliesslich wurde das Blech während 7 Tagen in einem Klima von 40 °C und 100% gelagert, woraufhin erneut ein Haftungstest ("KL") vorgenommen wurde. Die Ergebnisse sind in Tabelle 1 dargestellt.

Tabelle 1. Zusammensetzungen und Haftungen von Sikaflex®-250 DM-2 auf einem mit dem Automobillack HDTC 4041 von PPG beschichteten Metallblech nach Vorbehandlung mit einer latenten Säure bzw. einer freien Säure enthaltenden Vorbehandlungsmittel.

| | latente Säure bzw. freie Säure | Lösungsmittel | Gew.-% | RT | WL | KL |
|---|---|---|---|---|---|---|
| *Ref.1* | - | Isopropanol | - | 5 | 5 | 5 |
| *Ref.2* | Dodecylbenzolsulfonsäure | Isopropanol | 1.0 | 2 | 2 | 2 |
| *Ref.3* | p-Toluolsulfonsäure | Isopropanol | 1.0 | 2 | 2 | 2 |
| *Ref.4* | Methansulfonsäure | Isopropanol | 0.3 | 5 | 5 | 5 |
| *Ref.5* | Chlorwasserstoffsäure | Isopropanol | 0.5 | 2 | 2 | 2 |
| *Ref.6* | Schwefelsäure | Isopropanol | 0.3 | 3 | 3 | 3 |
| *Ref.7* | Phosphorsäure | Isopropanol | 0.5 | 5 | 5 | 4 |
| *Ref.8* | Essigsäure | Isopropanol | 0.3 | 4 | 4 | 4 |
| *Ref.9* | Benzoesäure | Isopropanol | 0.4 | 4 | 4 | 4 |
| *Ref.10* | Oxalsäure | Isopropanol | 0.3 | 4 | 5 | 5 |
| *1* | Trimethylsilyl-benzolsulfonat | Isopropanol | 0.7 | 1 | 1 | 1 |

Wie aus der Tabelle 1 ersichtlich ist, war die Haftung von Sikaflex®-250 DM-2 bei Verwendung der latenten Säure Trimethylsilyl-benzolsulfonat ausgezeichnet, während bei den freien Säuren nur im Fall von Dodecylbenzolsulfonsäure, p-Toluolsulfonsäure, Methansulfonsäure, Schwefelsäure und Chlorwasserstoffsäure zufriedenstellende Haftung erzielt wurde. Es wurde bei Beispiel *1* keine Korrosion des Lackes festgestellt werden.

In einer weiteren Versuchsreihe wurde nun für die latente Säure Trimethylsilyl-benzolsulfonat sowie für die gemäss Tabelle 1 drei der am besten wirksamen freien Säuren anhand einer Konzentrationsreihe untersucht, in welchem Konzentrationsbereich die haftverbessernde Wirkung der Lösungen gegeben ist. Es handelt sich auch hier um binäre Mischungen von Isopropanol und der freien, bzw. latenten, Säure, wobei die angegebene Gewichts-Menge sich ebenfalls auf die freie, bzw. latente, Säure bezieht. Die Ergebnisse sind in Tabelle 2 dargestellt.

Aus der Tabelle 2 ist ersichtlich, dass die haftverbessernde Wirkung von Trimethylsilyl-benzolsulfonat in Isopropanol in einem Konzentrationsbereich von 0.5 bis 10 Gew.-%, insbesondere 0.7 bis 10 Gew.-%, gegeben ist. Überraschend ist hierbei insbesondere, dass bereits bei einer Konzentration von 0.7 Gew.-% Trimethylsilyl-benzolsulfonat eine sehr gute Haftung erzielt wird, während die freien Säuren für ein vergleichbares Ergebnis deutlich höher dosiert sein müssen. Es wurde bei keinem der Vorbehandlungsmittel *1* bis *6* eine Korrosion des Lackes festgestellt.

Tabelle 2. Zusammensetzungen und Haftungen von Sikaflex®-250 DM-2 auf einem mit dem Automobillack HDTC 4041 von PPG beschichteten Metallblech nach Vorbehandlung mit einer latenten Säure bzw. einer freien Säure enthaltenden Vorbehandlungsmittel.

| latente Säure bzw. freie Säure | Gew.-% | RT | WL | KL | |
|---|---|---|---|---|---|
| Dodecylbenzolsulfonsäure | 0.3 | 3 | 5 | 5 | *Ref.2-1* |
| | 0.5 | 2 | 3 | 3 | *Ref.2-2* |
| | 1.0 | 2 | 2 | 2 | *Ref.2* |
| | 2.5 | 1 | 1 | 1 | *Ref.2-3* |
| | 7.0 | 1 | 1 | 1 | *Ref.2-4* |

(fortgesetzt)

| latente Säure bzw. freie Säure | Gew.-% | RT | WL | KL | |
|---|---|---|---|---|---|
| p-Toluolsulfonsäure | 0.7 | 3 | 4 | 4 | *Ref.3-1* |
| | 1.0 | 2 | 2 | 2 | *Ref.3* |
| | 2.5 | 1 | 1 | 1 | *Ref.3-2* |
| | 7.0 | 1 | 1 | 1 | *Ref.3-3* |
| | 10 | 1 | 1 | 1 | *Ref.3-4* |
| Schwefelsäure | 0.1 | 5 | 5 | 5 | *Ref.6-1* |
| | 0.3 | 3 | 3 | 3 | *Ref.6* |
| | 0.5 | 3 | 2 | 3 | *Ref.6-2* |
| | 1.0 | 2 | 2 | 2 | *Ref.6-3* |
| Trimethylsilyl-benzolsulfonat | 0.5 | 3 | 3 | 3 | *2* |
| | 0.7 | 1 | 1 | 1 | *3* |
| | 1.0 | 1 | 1 | 1 | *1* |
| | 2.5 | 1 | 1 | 1 | *4* |
| | 7.0 | 1 | 1 | 1 | *5* |
| | 10 | 1 | 1 | 1 | *6* |

Haftung auf verschiedenen Automobillacken

Mit den Automobillacken **A** bis **F** beschichtete Metallbleche wurden mit Lösungen der latenten Säure Trimethylsilyl-benzolsulfonat, bzw. der freien Säuren Dodecylbenzolsulfonsäure und p-Toluolsulfonsäure (jeweils in der in Tabelle 3 angegebenen Konzentrationen für die freie bzw. latente Säure, in Isopropanol) vorbehandelt, indem die Lösungen mit einem Tuch aufgetragen und unmittelbar anschliessend mit einem trockenen Tuch wieder abgewischt wurden ("wipe on/off"). Nach einer Wartezeit von 10 Minuten wurde Sikaflex®-250 DM-2 als 10 mm breite Rundraupe aufgetragen und während 7 Tagen im Normklima (23 °C / 50% Luftfeuchtigkeit) ausgehärtet, woraufhin der erste Haftungstest ("RT") vorgenommen wurde. Darauf wurde das Blech während 7 Tagen bei 23 °C in Wasser eingetaucht, woraufhin erneut ein Haftungstest ("WL") vorgenommen wurde. Schliesslich wurde das Blech während 7 Tagen in einem Klima von 40 °C und 100% gelagert, woraufhin erneut ein Haftungstest ("KL") vorgenommen wurde. Die Ergebnisse sind in Tabelle 3 dargestellt. Untersuchte Automobillacke (Topcoats):

**A:** HDCT 4041 (PPG) **C:** HDCT 4022 (PPG) **E:** RK 8045 (DuPont)
**B:** HDCT 4031 (PPG) **D:** RK 4126 (DuPont) **F:** RK 8046 (DuPont)

Tabelle 3. Haftung von Sikaflex®-250 DM-2 auf mit den Automobillacken A bis F beschichteten Metallblechen nach Vorbehandlung mit einer latenten Säure bzw. einer freien Säure enthaltenden Vorbehandlungsmittel.

| Lack | | A | | | B | | | C | | |
|---|---|---|---|---|---|---|---|---|---|---|
| Latente Säure bzw. freie Säure | Gew.-% | RT | WL | KL | RT | WL | KL | RT | WL | KL |
| - | - | 5 | 5 | 5 | 5 | 5 | 5 | 5 | 5 | 5 |
| Dodecylbenzol-sulfonsäure | 2.5 | 1 | 1 | 1 | 1 | 1 | 1 | 1 | 1 | 1 |
| p-Toluolsulfonsäure | 2.5 | 1 | 1 | 1 | 1 | 1 | 1 | 1 | 1 | 1 |
| Trimethylsilyl-benzolsulfonat | 1.5 | 1 | 1 | 1 | 1 | 1 | 1 | 1 | 1 | 1 |
| | 3.0 | 1 | 1 | 1 | 1 | 1 | 1 | 1 | 1 | 1 |

(fortgesetzt)

| Lack | | A | | | B | | | C | | |
|---|---|---|---|---|---|---|---|---|---|---|
| Latente Säure bzw. freie Säure | Gew. -% | RT | WL | KL | RT | WL | KL | RT | WL | KL |
| | | | | | | | | | | |

| Lack | | D | | | E | | | F | | |
|---|---|---|---|---|---|---|---|---|---|---|
| Latente Säure bzw. freie Säure | Gew. -% | RT | WL | KL | RT | WL | KL | RT | WL | KL |
| - | - | 4 | 4 | 4 | 4 | 4 | 3 | 3 | 3 | 3 |
| Dodecylbenzol-sulfonsäure | 2.5 | 1 | 1 | 1 | 1 | 1 | 1 | 1 | 1 | 1 |
| p-Toluolsulfonsäure | 2.5 | 1 | 1 | 1 | 1 | 1 | 1 | 1 | 1 | 1 |
| Trimethylsilyl-benzolsulfonat | 1.5 | 1 | 1 | 1 | 1 | 1 | 1 | 1 | 1 | 1 |
| | 3.0 | 1 | 1 | 1 | 1 | 1 | 1 | 1 | 1 | 1 |

**Patentansprüche**

**1.** Verwendung einer latenten Säure, welche durch Kontakt mit Wasser in eine Säure mit einem $pK_a$ von weniger als 2 umsetzbar ist, in einer nichtwässrigen Zusammensetzung, um die Haftung auf einem zu verklebenden oder abzudichtenden Substrat zu verbessern, **dadurch gekennzeichnet, dass** die latente Säure ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyl-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethylsilyl-benzolsulfonat, ist.

**2.** Verwendung gemäss Anspruch 1, **dadurch gekennzeichnet, dass** die nichtwässrige Zusammensetzung mindestens ein organisches Lösungsmittel umfasst und geeignet ist zum Vorbehandeln des Substrats.

**3.** Verwendung gemäss Anspruch 2, **dadurch gekennzeichnet, dass** das organische Lösungsmittel ein Alkohol, insbesondere Isopropanol, ist.

**4.** Verwendung gemäss Anspruch 1, **dadurch gekennzeichnet, dass** die nichtwässrige Zusammensetzung zusätzlich mindestens ein organisches Lösungsmittel sowie mindestens ein Bindemittel umfasst und geeignet ist als Primer zum Voranstreichen des Substrats.

**5.** Verwendung gemäss Anspruch 1, **dadurch gekennzeichnet, dass** die nichtwässrige Zusammensetzung mindestens ein reaktives Polymer umfasst und geeignet ist als bei Raumtemperatur plastisch verformbarer Klebstoff oder Dichtstoff.

**6.** Verwendung gemäss Anspruch 5, **dadurch gekennzeichnet, dass** das reaktive Polymer ein Isocyanatgruppen und/oder Alkoxysilangruppen aufweisendes Polyurethanpolymer ist.

**7.** Verwendung gemäss einem der vorhergehenden Ansprüche, **dadurch gekennzeichnet, dass** der Mengenanteil der latenten Säure 0.1 bis 10 Gew.-% bezogen auf die nichtwässrige Zusammensetzung beträgt.

**8.** Verwendung gemäss einem der vorhergehenden Ansprüche, **dadurch gekennzeichnet, dass** die latente Säure Trimethylsilylbenzolsulfonat ist.

**9.** Verfahren zum Verkleben oder zum Abdichten umfassend die Schritte:

a) Bereitstellen einer haftverbessernden Zusammensetzung, umfassend eine in einem organischen Lösungsmittel gelöste latente Säure, welche durch Kontakt mit Wasser in eine Säure mit einem $pK_a$ von weniger als 2 umsetzbar ist, und danach:

      b) Applikation der Zusammensetzung auf ein Substrat **S1**
      c) Ablüften oder Abwischen der Zusammensetzung;
      d) Applikation eines Klebstoffes oder Dichtstoffes auf die abgelüftete oder abgewischte Zusammensetzung;
      e) Kontaktieren des Klebstoffes oder Dichtstoffes mit einem Substrat **S2;**

oder

      b') Applikation der Zusammensetzung auf ein Substrat **S1;**
      c') Ablüften oder Abwischen der Zusammensetzung;
      d') Applikation eines Klebstoffes oder Dichtstoffes auf ein Substrat **S2,**
      e') Kontaktieren des Klebstoffes oder Dichtstoffes mit der abgelüfteten oder abgewischten Zusammensetzung;

oder

      b") Applikation der Zusammensetzung auf ein Substrat **S1;**
      c") Ablüften oder Abwischen der Zusammensetzung;
      d") Applikation eines Klebstoffes oder Dichtstoffes zwischen die Oberflächen des Substrates **S1** und **S2;**

wobei das Substrat **S2** aus dem gleichen oder einem unterschiedlichen Material wie das Substrat **S1** besteht oder wobei das Substrat **S1** und Substrat **S2** ein Stück bilden, **dadurch gekennzeichnet, dass** die latente Säure ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyl-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethylsilyl-benzolsulfonat, ist..

10. Verfahren gemäss Anspruch 9, **dadurch gekennzeichnet, dass** an den Schritt e) oder e') oder d") ein Schritt f) des Aushärtens des Klebstoffes oder Dichtstoffes anschliesst.

11. Verfahren gemäss Anspruch 9 oder 10, **dadurch gekennzeichnet, dass** der Klebstoff oder Dichtstoff ein feuchtigkeitshärtender einkomponentiger Polyurethanklebstoff oder -dichtstoff ist.

12. Verfahren gemäss einem der Ansprüche 9 bis 11, **dadurch gekennzeichnet, dass** das Substrat **S1** ein lackiertes Substrat, insbesondere ein lackiertes Metall, ist.

13. Verfahren gemäss einem der Ansprüche 9 bis 12, **dadurch gekennzeichnet, dass** die latente Säure Trimethylsilylbenzolsulfonat ist.

14. Verfahren gemäss einem der Ansprüche 9 bis 13, **dadurch gekennzeichnet, dass** das organische Lösungsmittel ein Alkohol, insbesondere Isopropanol, ist.

15. Verfahren gemäss einem der Ansprüche 9 bis 14, **dadurch gekennzeichnet, dass** der Mengenanteil der latenten Säure 0.1 bis 10 Gew.-% bezogen auf die haftverbessernde Zusammensetzung beträgt.

16. Verklebter oder abgedichteter Artikel, welcher durch ein Verfahren gemäss einem der Ansprüche 9 bis 15 erhalten wurde.

17. Verklebter oder abgedichteter Artikel gemäss Anspruch 16, **dadurch gekennzeichnet, dass** der Artikel ein Transportmittel, insbesondere ein Automobil, oder ein Anbauteil eines Transportmittels, insbesondere eines Automobils, ist.

18. Vorbehandlungsmittel, enthaltend

i) mindestens eine latente Säure, welche durch Kontakt mit Wasser in eine Säure mit einem $pK_a$ von weniger als 2 umsetzbar ist,
ii) mindestens ein organisches Lösungsmittel, und
iii) mindestens ein Bindemittel und / oder mindestens ein Additiv, welches ausgewählt ist aus der Gruppe bestehend aus Farbstoffe, Lumineszenzindikatoren, Haftvermittler, insbesondere Titanate und Silane, und Tenside;

**dadurch gekennzeichnet, dass** die latente Säure ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyl-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethylsilyl-benzolsulfonat, ist.

19. Vorbehandlungsmittel gemäss Anspruch 18, **dadurch gekennzeichnet, dass** die latente Säure Trimethylsilylbenzolsulfonat ist.

20. Vorbehandlungsmittel gemäss einem der Ansprüche 18 bis 19, **dadurch gekennzeichnet, dass** die Menge des organischen Lösungsmittels 80 - 99.9 Gew.-%, insbesondere 90 - 99.9 Gew.-%, bevorzugt 90 - 99 Gew.-%, bezogen auf das Vorbehandlungsmittel, beträgt.

21. Vorbehandlungsmittel gemäss einem der Ansprüche 18 bis 19, **dadurch gekennzeichnet, dass** das Vorbehandlungsmittel mindestens ein Bindemittel umfasst und die Menge des organischen Lösungsmittels 40 - 80 Gew.-%, insbesondere 60 - 80 Gew.-%, bezogen auf das Vorbehandlungsmittel, beträgt.

22. Vorbehandlungsmittel gemäss einem der Ansprüche 18 bis 21, **dadurch gekennzeichnet, dass** das Bindemittel ein Isocyanatgruppen und/oder Alkoxysilangruppen und/oder Epoxidgruppen aufweisendes Polymer oder Oligomer ist.

23. Feuchtigkeitshärtender, bei Raumtemperatur plastisch verformbarer Klebstoff oder Dichtstoff, enthaltend

α) mindestens ein Trialkylsilylsulfonat, insbesondere Trimethylsilyl-benzolsulfonat, Trimethylsilyl-methansulfonat, Trimethylsilyl-trifluormethansulfonat, Trimethylsilyl-vinylsulfonat, Trimethylsilyl-dodecylsulfonat, Trimethylsilyl-p-toluolsulfonat, Trimethylsilyl-dodecylbenzolsulfonat, Trimethylsilyl-1-naphthalinsulfonat, Trimethylsilyl-dinonylnaphthalinsulfonat, Bis(trimethylsilyl)-dinonylnaphthalindisulfonat, Triethylsilyl-methansulfonat oder tert.-Butyldimethylsilyl-benzolsulfonat, bevorzugt Trimethylsilylbenzolsulfonat;
und
β) mindestens reaktives Polymer, insbesondere ein Isocyanatgruppen und/oder Alkoxysilangruppen aufweisendes Polymer, bevorzugt ein Isocyanatgruppen und/oder Alkoxysilangruppen aufweisendes Polyurethanpolymer.

**Claims**

1. Use of a latent acid which by contact with water is convertible into an acid having a $pK_a$ of less than 2 in a non-aqueous composition to promote adhesion to a substrate to be bonded or sealed, **characterized in that** the latent acid is a trialkylsilyl sulphonate, more particularly trimethylsilyl benzenesulphonate, trimethylsilyl methanesulphonate, trimethylsilyl trifluoromethanesulphonate, trimethylsilyl vinylsulphonate, trimethylsilyl dodecylsulphonate, trimethylsilyl p-toluenesulphonate, trimethylsilyl dodecylbenzenesulphonate, trimethylsilyl 1-naphthalenesulphonate, trimethylsilyl dinonylnaphthalenesulphonate, bis(trimethylsilyl) dinonylnaphthalenedisulphonate, triethylsilyl methanesulphonate or tert-butyldimethylsilyl benzenesulphonate.

2. Use according to Claim 1, **characterized in that** the non-aqueous composition comprises at least one organic solvent and is suitable for pretreating the substrate.

3. Use according to Claim 2, **characterized in that** the organic solvent is an alcohol, more particularly isopropanol.

4. Use according to Claim 1, **characterized in that** the non-aqueous composition further comprises at least one organic solvent and also at least one binder and is suitable as a primer for precoating the substrate.

5. Use according to Claim 1, **characterized in that** the non-aqueous composition comprises at least one reactive polymer and is suitable for use as a sealant or adhesive which is plastically deformable at room temperature.

6. Use according to Claim 5, **characterized in that** the reactive polymer is a polyurethane polymer containing isocyanate groups and/or alkoxysilane groups.

7. Use according to any one of the preceding claims, **characterized in that** the quantitative proportion of the latent acid is 0.1 % to 10% by weight, based on the non-aqueous composition.

8. Use according to any one of the preceding claims, **characterized in that** the latent acid is trimethylsilyl benzenesulphonate.

9. Method of adhesive bonding or of sealing, comprising the steps of:

a) providing an adhesion-promoting composition comprising a latent acid which is in solution in an organic solvent and which by contact with water is convertible into an acid having a $pK_a$ of less than 2, and thereafter:

b) applying the composition to a substrate **S1;**
c) flashing off or wiping the composition;
d) applying an adhesive or sealant to the flashed-off or wiped composition;
e) contacting the adhesive or sealant with a substrate **S2;**

or

b') applying the composition to a substrate **S1**;
c') flashing off or wiping the composition;
d') applying an adhesive or sealant to a substrate **S2,**
e') contacting the adhesive or sealant with the flashed-off or wiped composition;

or

b") applying the composition to a substrate **S1;**
c") flashing off or wiping the composition;
d") applying an adhesive or sealant between the surfaces of the substrates **S1** and **S2;**

the substrate **S2** being composed of the same material as or a different material than the substrate **S1,** or the substrate **S1** and substrate **S2** forming one piece, **characterized in that** the latent acid is a trialkylsilyl sulphonate, more particularly trimethylsilyl benzenesulphonate, trimethylsilyl methanesulphonate, trimethylsilyl trifluoromethanesulphonate, trimethylsilyl vinylsulphonate, trimethylsilyl dodecylsulphonate, trimethylsilyl p-toluenesulphonate, trimethylsilyl dodecylbenzenesulphonate, trimethylsilyl 1-naphthalenesulphonate, trimethylsilyl dinonylnaphthalenesulphonate, bis(trimethylsilyl) dinonylnaphthalenedisulphonate, triethylsilyl methanesulphonate or tert-butyldimethylsilyl benzenesulphonate.

10. Method according to Claim 9, **characterized in that** step e) or e') or d") is followed by a step f) of curing the adhesive or sealant.

11. Method according to Claim 9 or 10, **characterized in that** the adhesive or sealant is a moisture-curing one-component polyurethane adhesive or sealant.

12. Method according to any one of Claims 9 to 11, **characterized in that** the substrate **S1** is a painted substrate, more particularly a painted metal.

13. Method according to any one of Claims 9 to 12, **characterized in that** the latent acid is trimethylsilyl benzenesulphonate.

14. Method according to any one of Claims 9 to 13, **characterized in that** the organic solvent is an alcohol, more particularly isopropanol.

15. Method according to any one of Claims 9 to 14, **characterized in that** the quantitative proportion of the latent acid is 0.1 % to 10% by weight, based on the adhesion-promoting composition.

16. Bonded or sealed article obtained by a method according to any one of Claims 9 to 15.

17. Bonded or sealed article according to Claim 16, **characterized in that** the article is a means of transport, more particularly a car, or a mounted component for a means of transport, more particularly for a car.

18. Pretreatment composition comprising

    i) at least one latent acid which by contact with water is convertible into an acid having a $pK_a$ of less than 2,
    ii) at least one organic solvent, and
    iii) at least one binder and / or at least one additive which is selected from the group consisting of colorants, luminescent indicators, adhesion promoters, more particularly titanates and silanes, and surfactants;

**characterized in that** the latent acid is a trialkylsilyl sulphonate, more particularly trimethylsilyl benzenesulphonate, trimethylsilyl methanesulphonate, trimethylsilyl trifluoromethanesulphonate, trimethylsilyl vinylsulphonate, trimethylsilyl dodecylsulphonate, trimethylsilyl I p-toluenesulphonate, trimethylsilyl dodecylbenzenesulphonate, trimethylsilyl 1-naphthalenesulphonate, trimethylsilyl dinonylnaphthalenesulphonate, bis(trimethylsilyl) dinonylnaphthalenedisulphonate, triethylsilyl methanesulphonate or tert-butyldimethylsilyl benzenesulphonate.

19. Composition according to Claim 18, **characterized in that** the latent acid is trimethylsilyl benzenesulphonate.

20. Composition according to any one of Claims 18 to 19, **characterized in that** the amount of the organic solvent is 80% - 99.9%, more particularly 90% - 99.9%, preferably 90% - 99%, by weight, based on the pretreatment composition.

21. Composition according to any one of Claims 18 to 19, **characterized in that** the pretreatment composition comprises at least one binder and the amount of the organic solvent is 40% - 80%, more particularly 60% - 80%, by weight, based on the pretreatment composition.

22. Composition according to any one of Claims 18 to 21, **characterized in that** the binder is a polymer or oligomer containing isocyanate groups and/or alkoxysilane groups and/or epoxide groups.

23. Moisture-curing adhesive or sealant which is plastically deformable at room temperature, comprising
    α) at least one trialkylsilyl sulphonate, more particularly trimethylsilyl benzenesulphonate, trimethylsilyl methanesulphonate, trimethylsilyl trifluoromethanesulphonate, trimethylsilyl vinylsulphonate, trimethylsilyl dodecylsulphonate, trimethylsilyl p-toluenesulphonate, trimethylsilyl dodecylbenzenesulphonate, trimethylsilyl 1-naphthalenesulphonate, trimethylsilyl dinonylnaphthalenesulphonate, bis(trimethylsilyl) dinonylnaphthalenedisulphonate, triethylsilyl methanesulphonate or tert-butyldimethylsilyl benzenesulphonate, preferably trimethylsilyl benzenesulphonate; and
    β) at least one reactive polymer, more particularly a polymer containing isocyanate groups and/or alkoxysilane groups, preferably a polyurethane polymer containing isocyanate groups and/or alkoxysilane groups.

**Revendications**

1. Utilisation d'un acide latent, qui peut être transformé en un acide présentant un $pK_a$ inférieur à 2 par contact avec de l'eau, dans une composition non aqueuse pour améliorer l'adhérence sur un substrat à coller ou à boucher, **caractérisée en ce que** l'acide latent est un trialkylsilylsulfonate, en particulier le triméthylsilylbenzènesulfonate, le triméthylsilylméthanesulfonate, le triméthylsilyltrifluorométhanesulfonate, le triméthylsilylvinylsulfonate, le triméthylsilyldodécylsulfonate, le triméthylsilyl-p-toluènesulfonate, le triméthylsilyldodécylbenzènesulfonate, le triméthylsilyl-1-naphtalènesulfonate, le triméthylsilyldinonylnaphtalènesulfonate, le bis(triméthylsilyl)-dinonylnaphtalènedisulfonate, le triéthylsilylméthanesulfonate ou le tert-butyldiméthylsilylbenzènesulfonate.

2. Utilisation selon la revendication 1, **caractérisée en ce que** la composition non aqueuse comprend au moins un solvant organique et convient au prétraitement du substrat.

3. Utilisation selon la revendication 2, **caractérisée en ce que** le solvant organique est un alcool, en particulier l'isopropanol.

**4.** Utilisation selon la revendication 1, **caractérisée en ce que** la composition non aqueuse comprend en outre au moins un solvant organique ainsi qu'au moins un liant et convient comme apprêt pour la pré-enduction du substrat.

**5.** Utilisation selon la revendication 1, **caractérisée en ce que** la composition non aqueuse comprend au moins un polymère réactif et convient comme adhésif ou masse de bouchage plastiquement déformable à température ambiante.

**6.** Utilisation selon la revendication 5, **caractérisée en ce que** le polymère réactif est un polymère de polyuréthane présentant des groupes isocyanate et/ou alcoxysilane.

**7.** Utilisation selon l'une quelconque des revendications précédentes, **caractérisée en ce que** la proportion en quantité d'acide latent est de 0,1 à 10% en poids par rapport à la composition non aqueuse.

**8.** Utilisation selon l'une quelconque des revendications précédentes, **caractérisée en ce que** l'acide latent est le triméthylsilylbenzènesulfonate.

**9.** Procédé pour le collage ou le bouchage comprenant les étapes suivantes :

a) mise à disposition d'une composition améliorant l'adhérence, comprenant un acide latent dissous dans un solvant organique, qui peut être transformé en un acide présentant un $pK_a$ inférieur à 2 par contact avec de l'eau, puis
b) application de la composition sur un substrat **S1**
c) séchage par évaporation ou épongeage de la composition ;
d) application d'un adhésif ou d'une masse de bouchage sur la composition séchée par évaporation ou épongée ;
e) mise en contact de l'adhésif ou de la masse de bouchage avec un substrat **S2** ; ou
b') application de la composition sur un substrat **S1** c') séchage par évaporation ou épongeage de la composition ;
d') application d'un adhésif ou d'une masse de bouchage sur un substrat **S2**,
e') mise en contact de l'adhésif ou de la masse de bouchage avec la composition séchée par évaporation ou épongée ; ou
b") application de la composition sur un substrat **S1** ;
c") séchage par évaporation ou épongeage de la composition ;
d") application d'un adhésif ou d'une masse de bouchage entre les surfaces des substrats **S1** et **S2** ;

le substrat **S2** étant constitué par le même matériau que le substrat **S1** ou par un matériau différent de celui-ci ou le substrat **S1** et le substrat **S2** formant une pièce, **caractérisé en ce que** l'acide latent est un trialkylsilylsulfonate, en particulier le triméthylsilylbenzènesulfonate, le triméthylsilylméthanesulfonate, le triméthylsilyltrifluorométhanesulfonate, le triméthylsilylvinylsulfonate, le triméthylsilyldodécylsulfonate, le triméthylsilyl-p-toluènesulfonate, le triméthylsilyldodécylbenzènesulfonate, le triméthylsilyl-1-naphtalènesulfonate, le triméthylsilyldinonylnaphtalènesulfonate, le bis(triméthylsilyl)-dinonylnaphtalènedisulfonate, le triéthylsilylméthanesulfonate ou le tert-butyldiméthylsilylbenzènesulfonate.

**10.** Procédé selon la revendication 9, **caractérisé en ce que** l'étape e) ou e') ou d") est suivie d'une étape f) de durcissement de l'adhésif ou de la masse de bouchage.

**11.** Procédé selon la revendication 9 ou 10, **caractérisé en ce que** l'adhésif ou la masse de bouchage est un adhésif ou une masse de bouchage à base de polyuréthane à un composant, durcissant sous l'effet de l'humidité.

**12.** Procédé selon l'une quelconque des revendications 9 à 11, **caractérisé en ce que** le substrat **S1** est un substrat laqué, en particulier un métal laqué.

**13.** Procédé selon l'une quelconque des revendications 9 à 12, **caractérisé en ce que** l'acide latent est le triméthylsilylbenzènesulfonate.

**14.** Procédé selon l'une quelconque des revendications 9 à 13, **caractérisé en ce que** le solvant organique est un alcool, en particulier l'isopropanol.

**15.** Procédé selon l'une quelconque des revendications 9 à 14, **caractérisé en ce que** la proportion en quantité de l'acide latent est de 0,1 à 10% en poids par rapport à la composition améliorant l'adhérence.

**16.** Objet collé ou bouché, qui a été obtenu par un procédé selon l'une quelconque des revendications 9 à 15.

**17.** Objet collé ou bouché selon la revendication 16, **caractérisé en ce que** l'objet est un moyen de transport, en particulier une automobile, ou une pièce d'un moyen de transport, en particulier d'une automobile.

**18.** Agent de prétraitement, contenant

i) au moins un acide latent qui peut être transformé en un acide présentant un $pK_a$ inférieur à 2 par contact avec de l'eau,
ii) au moins un solvant organique, et
iii) au moins un liant et/ou au moins un additif, qui est choisi dans le groupe constitué par les colorants, les indicateurs de luminescence, les promoteurs d'adhérence, en particulier les titanates et les silanes, et les agents tensioactifs ;

**caractérisé en ce que** l'acide latent est un trialkylsilylsulfonate, en particulier le triméthylsilylbenzènesulfonate, le triméthylsilylméthanesulfonate, le triméthylsilyltrifluorométhanesulfonate, le triméthylsilylvinylsulfonate, le triméthylsilyldodécylsulfonate, le triméthylsilyl-p-toluènesulfonate, le triméthylsilyldodécylbenzènesulfonate, le triméthylsilyl-1-naphtalènesulfonate, le triméthylsilyldinonylnaphtalènesulfonate, le bis(triméthylsilyl)-dinonylnaphtalènedisulfonate, le triéthylsilylméthanesulfonate ou le tert-butyldiméthylsilylbenzènesulfonate.

**19.** Agent de prétraitement selon la revendication 18, **caractérisé en ce que** l'acide latent est le triméthylsilylbenzènesulfonate.

**20.** Agent de prétraitement selon l'une quelconque des revendications 18 et 19, **caractérisé en ce que** la quantité de solvant organique est de 80-99,9% en poids, en particulier de 90-99,9% en poids, de préférence de 90-99% en poids, par rapport à l'agent de prétraitement.

**21.** Agent de prétraitement selon l'une quelconque des revendications 18 et 19, **caractérisé en ce que** l'agent de prétraitement comprend au moins un liant et la quantité de solvant organique est de 40-80% en poids, en particulier de 60-80% en poids, par rapport à l'agent de prétraitement.

**22.** Agent de prétraitement selon l'une quelconque des revendications 18 à 21, **caractérisé en ce que** le liant est un polymère ou un oligomère présentant des groupes isocyanate et/ou alcoxysilane et/ou époxyde.

**23.** Adhésif ou masse de bouchage durcissant sous l'effet de l'humidité, plastiquement déformable à température ambiante, contenant

α) au moins un trialkylsilylsulfonate, en particulier le triméthylsilylbenzènesulfonate, le triméthylsilylméthanesulfonate, le triméthylsilyltrifluorométhanesulfonate, le triméthylsilylvinylsulfonate, le triméthylsilyldodécylsulfonate, le triméthylsilyl-p-toluènesulfonate, le triméthylsilyldodécylbenzènesulfonate, le triméthylsilyl-1-naphtalènesulfonate, le triméthylsilyldinonylnaphtalènesulfonate, le bis(triméthylsilyl)-dinonylnaphtalènedisulfonate, le triéthylsilylméthanesulfonate ou le tertbutyldiméthylsilylbenzènesulfonate, de préférence le triméthylsilylbenzènesulfonate ; et
β) au moins un polymère réactif, en particulier un polymère présentant des groupes isocyanate et/ou alcoxysilane, de préférence un polymère de polyuréthane présentant des groupes isocyanate et/ou alcoxysilane.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1760129 A1

- EP 0592139 A1

**In der Beschreibung aufgeführte Nicht-Patentliteratur**

- Handbook of Chemistry and Physics. CRC Press

- 11 Kirk-Othmer Encyclopedia of Chemical Technology. John Wiley & Sons, 1994, 227-241